# EUROPÄISCHE PATENTSCHRIFT

(11) **EP 0 663 573 B1**
(45) Veröffentlichungstag und Bekanntmachung des Hinweises auf die Patenterteilung: **14.07.1999**
(21) Anmeldenummer: 94117806.3
(22) Anmeldetag: 11.11.1994
(51) Int. Cl.: F24F 5/00, E04B 2/88

(54) **Zweischalige Fassade**
Double wall façade
Façade à double paroi

(30) Priorität: 28.12.1993 DE 4344750
(43) Veröffentlichungstag der Anmeldung: 19.07.1995
(73) Patentinhaber: SCHÜCO International KG, 33609 Bielefeld (DE)
(72) Erfinder: Ueckermann, Horst, D-32107 Bad Salzuflen (DE)
(74) Vertreter: Stracke, Alexander, Dipl.-Ing.

(56) Entgegenhaltungen:
- EP-A- 0 467 876
- WO-A-91/19137
- DE-A- 4 032 552

## Beschreibung

Die Erfindung bezieht sich auf eine zweischalige Fassade für ein Gebäude mit einer Innen- und einer im wesentlichen transparenten Außenfassade, zwischen der Innen- und Außenfassade angeordneten Trennelementen, die zwischen der Innen- und der Außenfassade vorgesehene Gefache bilden.

Es ist eine zweischalige Fassade der genannten Art bekannt (DE-A-40 32 552, Fig. 6 und 7), bei der zwischen zwei gebäudehohen Reihen übereinanderliegender geschoßhoher Gefache ein Lüftungskanal angeordnet ist, der über Zuluft- und Abluftöffnungen mit den Gefachen strömungstechnisch verbunden ist. Ferner sind zwischen dem Innenraum des Gebäudes und den geschoßhohen Gefachen Abluftöffnungen angeordnet. Die Luftbewegungen in den einzelnen Gefachen können nicht unabhängig voneinander beeinflußt werden, sondern sind abhängig von den Strömungsbedingungen in dem gebäudehohen Lüftungskanal.

Der Erfindung liegt die Aufgabe zugrunde, eine zweischalige Fassade der eingangs genannten Art derart weiterzubilden, daß eine individuellere Belüftung eines Gefaches und insbesondere eine befriedigende Wärmeabfuhr in den Sommermonaten ermöglicht wird.

Diese Aufgabe wird durch die kennzeichnenden Merkmale des Patentanspruches 1 in Verbindung mit den Merkmalen des Oberbegriffs gelöst.

Nunmehr kann in den Gefachen, die mit einer erhöhten Wärmestrahlung beaufschlagt werden, eine Zwangsströmung erzeugt werden, während in den Gefachen der Fassade, die im Schatten liegen oder keiner erhöhten Wärmeeinstrahlung ausgesetzt sind, die Einlauß- und Auslaßöffnungen verschlossen bleiben.

Aus Gründen der Einfachheit ist es zweckmäßig, in jedem Gefach eine elektrisch betriebene Lüftungseinrichtung vorzusehen, die mit einem Walzen lüfter ausgerüstet ist.

Auch bei kurzzeitiger bzw. wechselnder Sonneneinstrahlung wird bei der erfindungsgemäß aufgebauten Fassade in den sich aufheizenden Gefachen eine schnelle Wärmeabfuhr erreicht. Da nur in den sich aufheizenden Gefachen die Lüftungseinrichtung eingeschaltet wird, ist der Energieaufwand gering.

Gemäß einer Ausführungsform der Erfindung ist ein Fotovoltaikelement vorgesehen, das den elektrischen Strom für die Lüftungseinrichtung(en) erzeugt. Insbesondere ist ein Fotovoltaikelement pro Gefach und Lüftungseinrichtung angeordnet.

Um einen optimalen Wirkungsgrad des Fotovoltaikelementes zu gewährleisten, ist das Fotovoltaikelement Teil der Außenfassade. Aus ästhetischen Gründen kann es jedoch gemäß einer anderen Ausführungsform auch im Gefach angeordnet sein.

Für eine individuelle Steuerung des Luftstroms durch das Gefach sind Sensoren für die Steuerung der Lüftungseinrichtung vorgesehen. Auf einfache Weise ist es nunmehr möglich, nach einer vorgegebenen Kennlinie die Lüftungseinrichtung ein- oder auszuschalten und die Leistung der Lüftungseinrichtung in Abhängigkeit von der Temperatur und/oder Energieeinstrahlung zu steuern.

Weitere Anwendungsmöglichkeiten der erfindungsgemäßen zweischaligen Fassade ergeben sich dadurch, daß die Einlaß- und/oder Auslaßöffnung verschließbar ausgebildet ist. Beispielsweise wenn hinter der Außenfassade in der Innenfassade ein Fenster angeordnet ist, kann durch ein Schließen der Einlaßöffnung ein gezieltes, zwangsweise durchgeführtes Entlüften des hinter dem Fenster liegenden Raumes vorgenommen werden, wenn gleichzeitig die Auslaßöffnung geöffnet und die Lüftungseinrichtung in Betrieb ist.

Als Sicherheit gegen eine Fehlfunktion der Lüftungseinrichtung bei geschlossener Einlaß- und Auslaßöffnung ist gemäß einer Ausführungsform ein Schalter vorgesehen, der die Lüftungseinrichtung stillsetzt, wenn die beiden Öffnungen geschlossen sind.

Um die Leistung der Lüftungseinrichtung, also den durch die Lüftungseinrichtung verursachten Luftstrom durch das Gefach, auf einfache Weise in Abhängigkeit von der Sonneneinstrahlung zu steuern, wird die Lüftungseinrichtung unmittelbar mit dem vom Fotovoltaikelement erzeugten Gleichstrom gespeist. Auf diese Weise ändert sich die Leistung der Lüftungseinrichtung unmittelbar in Abhängigkeit von der Sonneneinstrahlung. Gemäß einer anderen Ausführungsform sind für den eben genannten Zweck mehrere Lüftungseinrichtungen vorgesehen, die nacheinander in Abhängigkeit von der Sonneneinstrahlung auf das Fotovoltaikelement angeschaltet und betrieben werden.

Weitere Merkmale und Vorteile bilden die Gegenstände der Unteransprüche.

Zusätzliche Merkmale und Vorteile ergeben sich aber auch aus der folgenden Beschreibung zweier Ausführungsformen der Erfindung im Zusammenhang mit der Zeichnung. Es zeigen:
- Figur 1: eine Außenansicht eines Teils der zweischaligen Fassade gemäß einer ersten Ausführungsform der Erfindung,
- Figur 2: eine Schnittansicht entlang der Linie II-II von Figur 1, und
- Figur 3: eine Schnittansicht eines Teils einer zweischaligen Fassade gemäß einer weiteren Ausführungsform der Erfindung.

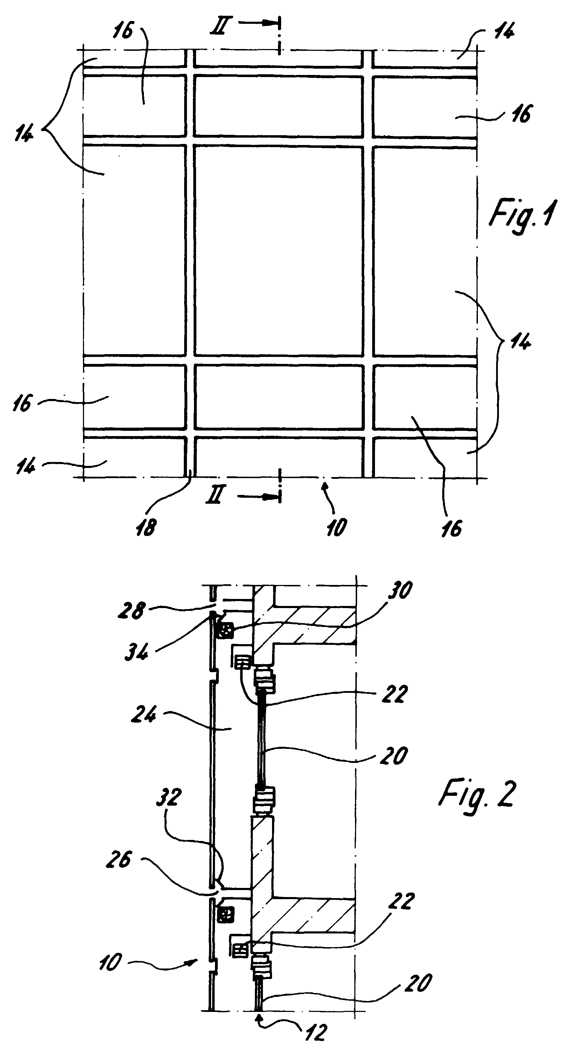

Die Figur 1 und 2 zeigt eine zweischalige Fassade mit einer Außenfassade 10 und einer Innenfassade 12. Die Außenfassade 10 wird durch Glaspaneele 14 und Fotovoltaikelemente 16 gebildet. Die Glaspaneele 14 sowie die Fotovoltaikelemente 16 werden durch mit der Innenfassade 12 fest verbundenen Pfosten 18 gehalten.

Die Innenfassade 12 ist zur Außenfassade 10 beabstandet angeordnet und weist Fenster 20 mit jeweils einem vor einem Fenster 20 angeordneten Lamellenrollo 22 auf. Die Innenfassade 12 kann dabei aus unterschiedlichen Materialien und unterschiedlichen Bauelementen aufgebaut sein.

Die Pfosten 18 halten, wie eingangs bereits erwähnt, sowohl das Fotovoltaikelement 16 als auch das Glaspaleel 14 und bilden zugleich einen Teil eines Trennelementes, das einen Bereich, der durch ein Glaspaneel 14 und ein darüber angeordnetes Fotovoltaikelement 16 gebildet wird, zwischen Außenfassade 10 und Innenfassade 12 so begrenzt, daß ein Gefach 24 gebildet ist. Dieses Gefach 24 ist zu benachbarten Gefachen 24 abgeschottet, wodurch keine Luftströmung zwischen benachbarten Gefachen 24 entstehen kann.

Wie deutlich der Figur 2 zu entnehmen ist, ist jedem Gefach 24 eine Einlaßöffnung 26 sowie eine Auslaßöffnung 28 zugeordnet, die sich durch die Außenfassade 10 erstreckt. Im Bereich der Auslaßöffnung 28 ist ein elektrisch betriebener Walzenlüfter 30 angebracht, der sich im wesentlichen über die Breite des Gefaches 24 erstreckt. Der Walzenlüfter 30 wird durch den vom Fotovoltaikelement 16 durch Energieeinstrahlung erzeugten Strom angetrieben. Da nun das Fotovoltaikelement 16 Gleichstrom erzeugt, wird der Walzenlüfter 30 in Abhängigkeit der Energieeinstrahlung, also der Sonneneinstrahlung, betrieben.

Strahlt viel Sonnenenergie auf das Fotovoltaikelement 16, ist die Leistung des Walzenlüfters 30 höher, als wenn weniger Sonnenenergie auf das Fotovoltaikelement 16 einstrahlt. Damit wird nun der Effekt erreicht, daß, je höher die Sonneneinstrahlung auf das Fotovoltaikelement 16 ist, desto größer ist die Leistung des Walzenlüfters 30 und desto höher ist die Wärmeabfuhr aus dem Gefach 24. Dies ermöglicht, daß sich das Gefach 24 im wesentlichen nicht über die Außentemperatur erhitzt.

Bei der Einlaßöffnung 26 und der Auslaßöffnung 28 ist eine Verschlußklappe 32 bzw. 34 vorgesehen. Durch diese Verschlußklappen 32 und 34 sind die Einlaß- und Auslaßöffnungen 26 und 28 verschließbar. Ist die Einlaß- und Auslaßöffnung 26 und 28 verschlossen, ist der Walzenlüfter 30 durch einen mit den Verschlußklappen 32 und 34 zusammenwirkenden Schalter 35 stillgesetzt. Die Verschlußstellung der beiden Verschlußklappen 32 und 34 dient dem Winterbetrieb, indem die einstrahlende Sonne die Luft innerhalb der Fassade erwärmt und einen Wärmeabfluß vermindert und somit Heizkosten des Gebäudes einspart.

Über die Verschlußklappen 32 und 34 kann zudem aber auch eine zwangsweise Raumentlüftung vorgenommen werden, indem die Verschlußklappe 32 bei der Einlaßöffnung 26 verschlossen und die Verschlußklappe 34 bei der Auslaßöffnung geöffnet ist. Ist zusätzlich das in der Innenfassade 12 angeordnete Fenster 20 geöffnet, beispielsweise durch Kippstellung oder Drehstellung, wird durch den Betrieb des Walzenlüfters 30 durch das Fotovoltaikelement 16 und/oder durch zusätzlich zugeführten Strom zum Walzenlüfter 30 der Raum auf einfache Weise entlüftet.

Dafür ist der Walzenlüfter 30 auch mit einem normalen Stromnetz verbunden.

Weiterhin kann der Walzenlüfter 30 auch in Abhängigkeit von der Außentemperatur und/oder der Innentemperatur des Gefaches 24 betrieben werden. Dafür sind entsprechende, hier nicht dargestellte, Sensoren an der Außenfassade 10 bzw. im Gefach 24 angeordnet und mit einer hier ebenfalls nicht dargestellten Steuerungseinrichtung für den Walzenlüfter 30 verbunden. Dadurch ist es möglich, den Walzenlüfter 30 in Abhängigkeit von der Temperatur zu betreiben und falls der durch die Sonneneinstrahlung auf das Fotovoltaikelement 16 erzeugte elektrische Strom nicht ausreicht, um den Walzenlüfter 30 zu betreiben, wird zusätzliche Energie aus dem Stromnetz dem Walzenlüfter 30 zugeführt. Diese Steuerungen sind grundsätzlich bekannt und werden deshalb nicht näher erläutert.

Gemäß einer anderen, hier nicht dargestellten Ausführungsform, sind statt des Walzenlüfters 30 mehrere kürzere Einzellüfter vorgesehen, die entsprechend der Breite des Gefaches 24 in entsprechender Anzahl nebeneinander angebracht sind. Dafür können Standardlüfter eingesetzt werden, die eine annähernd optimale Bestückung je Gefachbreite ermöglichen. Die Einzellüfter sind elektrisch so geschaltet, daß bei geringer Energieeinstrahlung der Sonne und damit bei einem geringen Leistungsangebot des Stromes lediglich ein erster Einzellüfter in Betrieb gesetzt wird. Nach Anlaufen dieses Einzellüfters und Reduzierung des Anlaufstroms wird bei einem bestimmten Spannungsniveau der nächstfolgende Einzellüfter zugeschaltet. Sinkt dabei die Spannung z. B. unter einen Minimumwert ab, wird der nachfolgende Lüfter wieder abgeschaltet, da offensichtlich eine ausreichende Energieeinstrahlung auf das Fotovoltaikelement 16 nicht gegeben ist und somit auch die Lüfterleistung nicht erforderlich ist.

Bleibt aber die Spannung stabil, werden nach und nach alle Einzellüfter zeitversetzt in der eben beschriebenen Weise zugeschaltet, so daß bei maximaler Energieeinstrahlung der Sonne auf das Fotovoltaikelement 16 auch die maximale Lüfterleistung zur Verfügung steht, um den Luftaustausch im Fassadenzwischenraum, also im Gefach 24, vorzunehmen.

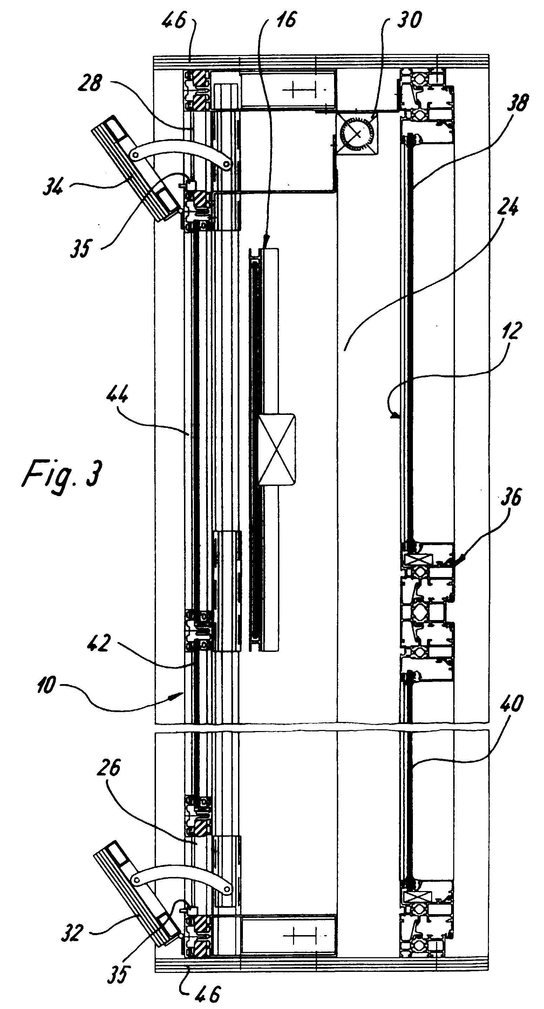

In Figur 3 ist eine weitere Ausführungsform der Erfindung dargestellt, wobei für funktiontechnisch gleiche Teile dieselben Bezugszeichen verwendet werden. Die Innenfassade 12 weist ein Fensterelement 36 auf, das aus einem oberen Kippflügelteil 38 und einem unteren Dreh- und Kippflügelteil 40 besteht. Die Außenfassade besteht pro Gefach 24 aus zwei Glaspaneelen 42 und 40 und aus den Verschlußklappen 32 und 34, die Teil der Außenfassade 10 und dafür mit Glasplatten bedeckt sind.

Das Fotovoltaikelement 16 befindet sich im Gefach 24 hinter dem oberen Glaspaneel 44 und vor dem oberen Kippflügelteil 38. Das obere Kippflügelteil 38 des Fensters 36 ist mit einem undurchsichtigen Paneel bestückt. Im oberen Bereich des Gefaches 24 befindet sich der oder die Walzenlüfter 30. Ebenso wie bei der zweischaligen Fassade gemäß der ersten Ausführungsform kann auch bei dieser Ausführungsform vor dem Fenster 36 ein Sonnenschutz, beispielsweise in Form eines Lamellenrollos, vorgesehen sein.

Deutlich erkennbar sind bei dieser Darstellung auch die weiteren Trennelemente 46, die das Gefach 24 nach oben und unten begrenzen.

Beispielsweise ist das gesamte Gefach 2000 mm hoch, wobei das obere Glaspaneel 44 eine Höhe von ca. 450 mm hat. Die Außenfassade 10 und die Innenfassade 12 haben einen Abstand von 250 mm, gemessen von dem unteren Glaspaneel 42 zu dem unteren Dreh- und Kippflügelteil 40 des Fensters 36.

Ein Vorteil der Ausführungsform nach Figur 3 ist darin zu sehen, daß die gesamten technischen Einrichtungen für das Prinzip der Zwischenraum- bzw. Gefachentlüftung im Bereich des oberen Kippflügelteils 38 und des oberen Glaspaneels 44 angeordnet sind. Das obere Kippflügelteil 38 kann somit zur Be- und Entlüftung des hinter dem Fenster 36 befindlichen Raumes als auch zu Servicezwecken, beispielsweise Wartung des Walzenlüfters 30 und des Fotovoltaikelementes 16, benutzt werden.

Es dürfte klar sein, daß die Gestaltung der Außen- und der Innenfassade 10 und 12 frei wählbar und den Wünschen des Architekten anpaßbar ist, ohne den beanspruchten Schutzbereich zu verlassen.

Die Erfindung zeichnet sich durch die beschriebene gesteuerte Wärmeabfuhr durch die Lüftungseinrichtung 30 in Abhängigkeit von der Energieeinstrahlung und/oder der Temperaturen aus. In Sekundenbruchteilen entsteht an dem Fotovoltaikelement eine elektrische Spannung, die unmittelbar und in kürzesten Regelungsintervallen den dahinter befindlichen Walzenlüfter 30 in Betrieb setzt. Dieses Lüftungsprinzip ist dabei vom Fassadenaufbau unabhängig und schafft zusätzliche Entlüftungsmöglichkeiten gegenüber bisher bekannten thermisch bedingten Entlüftungsprinzipien.

### Bezugszeichen:

- 10: Außenfassade
- 12: Innenfassade
- 14: Glaspaneel
- 16: Fotovoltaikelement
- 18: Pfosten
- 20: Fenster
- 22: Lamellenrollos
- 24: Gefach
- 26: Einlaßöffnung
- 28: Auslaßöffnung
- 30: Walzenlüfter
- 32: Verschlußklappe (unten)
- 34: Verschlußklappe (oben)
- 35: Schalter
- 36: Fenster
- 38: oberes Kippflügelteil
- 40: unteres Dreh- und Kippflügelteil
- 42: Glaspaneel (unten)
- 44: Glaspaneel (oben)
- 46: Trennelement (horizontal)

## Patentansprüche

1. Zweischalige Fassade für ein Gebäude mit einer Innen- und einer im wesentlichen transparenten Außenfassade (10,12), zwischen der Innen- und der Außenfassade angeordneten Trennelementen, die zwischen der Innen- und der Außenfassade vorgesehene Gefache bilden, **dadurch gekennzeichnet,** daß sämtliche Gefache (24) geschoßhoch oder annähernd geschoßhoch ausgebildet sind, daß vertikal verlaufende, in Abstand voneinander angeordnete Pfosten (18) zum Halten von Fassadenelementen (14,16;32,34;42,44;38,40) der Außen- (10) und der Innenfassade (12) zusammen mit horizontal sich erstreckenden Trennelementen (46) die Gefache (24) umlaufend begrenzen und eine Luftströmung zwischen benachbarten Gefachen unterbinden und in jedem Gefach eine in Abhängigkeit von der Energieeinstrahlung auf das Gefach der Fassade und/oder in Abhängigkeit von der Temperatur gesteuerte Lüftungseinrichtung (30) vorgesehen ist, die Luft in das Gefach (24) durch die Einlaßöffnungen (26) einsaugt und/oder aus dem Gefach (24) durch die Auslaßöffnung (26) ausbläst.

2. Zweischalige Fassade nach Anspruch 1, dadurch gekennzeichnet, daß die Lüftungseinrichtung (30) elektrisch betrieben ist.

3. Zweischalige Fassade nach Anspruch 1 oder 2, dadurch gekennzeichnet, daß die Lüftungseinrichtung durch einen Walzen lüfter (30) gebildet ist.

4. Zweischalige Fassade nach Anspruch 2 oder 3, dadurch gekennzeichnet, daß die Lüftungseinrichtung (30) im wesentlichen im Bereich der Auslaßöffnung (26) angeordnet ist.

5. Zweischalige Fassade nach einem der vorangehenden Ansprüche, dadurch gekennzeichnet, daß sich die Lüftungseinrichtung (30) im wesentlichen über die Breite des Gefaches (24) erstreckt.

6. Zweischalige Fassade nach einem der vorangehenden Ansprüche, dadurch gekennzeichnet, daß mehrere Lüftungseinrichtungen (30) pro Gefach (24) vorgesehen sind.

7. Zweischalige Fassade nach Anspruch 2 bis 6, dadurch gekennzeichnet, daß ein Fotovoltaikelement (16) vorgesehen ist, das elektrischen Strom für die Lüftungseinrichtung(en) (30) erzeugt.

8. Zweischalige Fassade nach Anspruch 7, dadurch gekennzeichnet, daß ein Fotovoltaikelement (16) pro Gefach (24) und Lüftungseinrichtung (30) vorgesehen ist.

9. Zweischalige Fassade nach Anspruch 7 oder 8, dadurch gekennzeichnet, daß das Fotovoltaikelement (16) Teil der Außenfassade (10) ist.

10. Zweischalige Fassade nach Anspruch 7 oder 8, dadurch gekennzeichnet, daß das Fotovoltaikelement (16) im Gefach (24) angeordnet ist.

11. Zweischalige Fassade nach einem der Ansprüche 7 bis 10, dadurch gekennzeichnet, daß die Lüftungseinrichtung (30) in Abhängigkeit der Einstrahlungsenergie auf das Fotovoltaikelement (16) gesteuert ist.

12. Zweischalige Fassade nach Anspruch 11, dadurch gekennzeichnet, daß zusätzliche Sensoren für die Steuerung der Lüftungseinrichtung (30) vorgesehen sind.

13. Zweischalige Fassade nach einem der vorangehenden Ansprüche, dadurch gekennzeichnet, daß die Einlaß- und/oder Auslaßöffnung (26,28) verschließbar ausgebildet ist.

14. Zweischalige Fassade nach Anspruch 13, dadurch gekennzeichnet, daß ein Schalter vorgesehen ist, der die Lüftungseinrichtung (30) stillsetzt, wenn die Einlaß- und/oder Auslaßöffnung verschlossen ist.

15. Zweischalige Fassade nach Anspruch 6 oder einem der Ansprüche 7 bis 14, dadurch gekennzeichnet, daß die Lüftungseinrichtungen (30) nacheinander in Abhängigkeit von der Einstrahlungsenergie auf das Fotovoltaikelement (16) angeschaltet und betrieben werden.

16. Zweischalige Fassade nach Anspruch 1, dadurch gekennzeichnet, daß die Gefache (24) eine Höhe von 2.000 mm aufweisen.

## Claims

1. A double-shell facade for a building having an inner and a substantially transparent outer facade (10, 12), separating elements which are arranged between the inner and the outer facades and which form compartments provided between the inner and outer facades, characterised in that all compartments (24) are of a storey-height or approximately storey-height configuration, that vertically extending mutually spaced uprights (18) for holding facade elements (14, 16; 32, 34; 42, 44; 38, 40) of the outer facade (10) and the inner facade (12) together with horizontally extending separating elements (46) delimit the compartments (24) therearound and prevent an air flow between adjacent compartments and provided in each compartment is a ventilation device (30) which is controlled in dependence on the incident radiation of energy on to the compartment of the facade and/or in dependence on temperature and which draws air into the compartment (24) through the inlet openings (26) and/or blows air out of the compartment (24) through the outlet opening (26).

2. A double-shell facade according to claim 1 characterised in that the ventilation device (30) is electrically operated.

3. A double-shell facade according to claim 1 or claim 2 characterised in that the ventilation device is formed by a cylinder-type fan (30).

4. A double-shell facade according to claim 2 or claim 3 characterised in that the ventilation device (30) is arranged substantially in the region of the outlet opening.

5. A double-shell facade according to one of the preceding claims characterised in that the ventilation device (30) extends substantially over the width of the compartment (24).

6. A double-shell facade according to one of the preceding claims characterised in that there are provided a plurality of ventilation devices (30) per compartment (24).

7. A double-shell facade according to claims 2 to 6 characterised in that there is provided a photovoltaic element (16) which produces electric power for the ventilation device or devices (30).

8. A double-shell facade according to claim 7 characterised in that there is provided a photovoltaic element (16) for each compartment (24) and ventilation device (30).

9. A double-shell facade according to claim 7 or claim 8 characterised in that the photovoltaic element (16) is part of the outer facade (10).

10. A double-shell facade according to claim 7 or claim 8 characterised in that the photovoltaic element (16) is arranged in the compartment (24).

11. A double-shell facade according to one of claims 7 to 10 characterised in that the ventilation device (30) is controlled in dependence on the incident radiation of energy on to the photovoltaic element (16).

12. A double-shell facade according to claim 11 characterised in that there are provided additional sensors for control of the ventilation device (30).

13. A double-shell facade according to one of the preceding claims characterised in that the inlet and/or outlet opening (26, 28) is adapted to be closable.

14. A double-shell facade according to claim 13 characterised in that there is provided a switch which stops the ventilation device (30) when the inlet and/or outlet opening is closed.

15. A double-shell facade according to claim 6 or one of claims 7 to 14 characterised in that the ventilation devices (30) are switched on and operated in succession in dependence on the incident radiation of energy on to the photovoltaic element (16).

16. A double-shell facade according to claim 1 characterised in that the compartments (24) are of a height of 2000 mm.

## Revendications

1. Façade à double paroi pour un bâtiment comportant une façade intérieure (10) et une façade extérieure (12) sensiblement transparente, ainsi que des éléments de séparation, disposés entre la façade intérieure et la façade extérieure, qui forment des compartiments prévus entre la façade intérieure et la façade extérieure, caractérisée en ce que tous les compartiments (24) ont la hauteur d'un étage ou approximativement cette hauteur, en ce que des poteaux (18) s'étendant verticalement, disposés à distance les uns des autres, destinés à soutenir des éléments de façade (14, 16 ; 32, 34 ; 42, 44 ; 38, 40) de la façade extérieure (10) et de la façade intérieure (12), délimitent les compartiments (24) avec des éléments de séparation (46) s'étendant horizontalement et empêchent une circulation d'air entre des compartiments voisins et dans chaque compartiment est prévu un dispositif de ventilation (30), commandé en fonction du rayonnement incident d'énergie sur le compartiment de la façade et/ou en fonction de la température, qui aspire l'air dans le compartiment (24) par les ouvertures d'entrée (26) et/ou le chasse du compartiment (24) par l'ouverture de sortie (26).

2. Façade à double paroi selon la revendication 1, caractérisée en ce que le dispositif de ventilation (30) fonctionne électriquement.

3. Façade à double paroi selon la revendication 1 ou 2, caractérisée en ce que le dispositif de ventilation est constitué par un ventilateur à rouleau (30).

4. Façade à double paroi selon la revendication 2 ou 3, caractérisée en ce que le dispositif de ventilation (30) est sensiblement disposé dans la région de l'ouverture de sortie (26).

5. Façade à double paroi selon l'une des revendications précédentes, caractérisée en ce que le dispositif de ventilation (30) s'étend sensiblement sur la largeur du compartiment (24).

6. Façade à double paroi selon l'une des revendications précédentes, caractérisée en ce que sont prévus plusieurs dispositifs de ventilation (30) par compartiment (24).

7. Façade à double paroi selon les revendications 2 à 6, caractérisée en ce qu'il est prévu un élément photovoltaïque (16), qui produit un courant électrique pour le (les) dispositif(s) de ventilation (30).

8. Façade à double paroi selon la revendication 7, caractérisée en ce qu'il est prévu un élément photovoltaïque (16) par compartiment (24) et par dispositif de ventilation (30).

9. Façade à double paroi selon la revendication 7 ou 8, caractérisée en ce que l'élément photovoltaïque (16) fait partie de la façade extérieure (10).

10. Façade à double paroi selon la revendication 7 ou 8, caractérisée en ce que l'élément photovoltaïque (16) est disposé dans le compartiment (24).

11. Façade à double paroi selon l'une des revendications 7 à 10, caractérisée en ce que le dispositif de ventilation (30) est commandé en fonction de l'énergie de rayonnement incident sur l'élément photovoltaïque (16).

12. Façade à double paroi selon la revendication 11, caractérisée en ce que des capteurs supplémentaires sont prévus pour la commande du dispositif de ventilation (30).

13. Façade à double paroi selon l'une des revendications précédentes, caractérisée en ce que l'ouverture d'entrée et/ou l'ouverture de sortie (26, 28) sont réalisées de manière à pouvoir être fermées.

14. Façade à double paroi selon la revendication 13, caractérisée en ce qu'il est prévu un interrupteur qui met à l'arrêt le dispositif de ventilation (30) lorsque l'ouverture d'entrée et/ou l'ouverture de sortie sont fermées.

15. Façade à double paroi selon la revendication 6 ou l'une des revendications 7 à 14, caractérisée en ce que les dispositifs de ventilation (30) sont mis en marche et exploités l'un après l'autre en fonction de l'énergie de rayonnement incident sur l'élément photovoltaïque (16).

16. Façade à double paroi selon la revendication 1, caractérisée en ce que les compartiments (24) ont une hauteur de 2 000 mm.
